# EUROPEAN PATENT APPLICATION

(11) **EP 2 624 146 A2**
(43) Date of publication of application: **07.08.2013**
(21) Application number: 12741747.5
(22) Date of filing: 29.03.2012
(51) Int. Cl.: G06F 17/30

(54) **DATA BLOCK PROCESSING METHOD AND SYSTEM, FRONT END DISPLAY DEVICE, AND BACK END PROCESSING DEVICE**

(71) Applicant: Huawei Technologies Co., Ltd., Shenzhen, Guangdong 518129 (CN)
(72) Inventor: WANG, Guosheng, Shenzhen Guangdong 518129 (CN); ZHOU, Hongkai, Shenzhen Guangdong 518129 (CN)
(74) Representative: Pfenning, Meinig & Partner GbR
(86) International application number: PCT/CN2012/073228
(87) International publication number: WO 2012/103839

(57) **Abstract**

Embodiments of the present invention provide a data block processing method and system, a front end display device, and a back end processing device. The method includes: when a user intends to move a data block in a data graph from a first location to a second location, obtaining, by a front end display device, location information of the second location; sending relocation request information to a back end processing device, wherein the relocation request information carries the location information of the second location and an identifier of the data block; receiving display instruction information sent from the back end processing device,wherein the display instruction information carries the location information of the second location and the identifier of the data block; and displaying the data block corresponding to the identifier of the data block, at the second location in the data graph according to the display instruction information. With the technical solutions of the embodiments of the present invention, the efficiency of data processing in a data graph can be improved effectively.

## Description

### FIELD OF THE INVENTION

Embodiments of the present invention relate to the field of data processing technologies, and in particular, to a data block processing method and system, a front end display device, and a back end processing device.

### BACKGROUND OF THE INVENTION

A data graph is used to present data in a graphic and vivid manner to a user, so that the user analyzes the data. Because data graphs have characteristics of being clear and comprehensible, data graphs may be widely applied in various systems.

Data graphs in the prior art are in the forms of bars, fans, and so on. In some special scenarios, in order to flexibly compare and analyze data, relocation operations such as drag need to be performed on a data block of a data graph. However, because the data blocks of the data graphs in the prior art are static, relocation operations such as drag cannot be performed, resulting in low efficiency of data processing in the data graphs in the prior art.

### SUMMARY OF THE INVENTION

Embodiments of the present invention provide a data block processing method and system, a front end display device, and a back end processing device to solve the problem that the efficiency of data processing in a data graph is low in the prior art and implement mobility of a data block in the data graph.

An embodiment of the present invention provides a data block processing method, including:
when a user intends to move a data block in a data graph from a first location to a second location, obtaining location information of the second location;
sending relocation request information to a back end processing device, wherein the relocation request information carries the location information of the second location and an identifier of the data block;
receiving display instruction information carrying the location information of the second location and the identifier of the data block, sent from the back end processing device; and
displaying the data block corresponding to the identifier of the data block, at the second location in the data graph according to the display instruction information.

An embodiment of the present invention further provides a data block processing method, including:
when a user intends to move a data block in a data graph from a first location to a second location, receiving relocation request information carrying location information of the second location of the data block, sent from a front end display device; and
sending display instruction information to the front end display device,wherein the display instruction information carries the location information of the second location and the identifier of the data block, so that the front end display device displays the data block corresponding to the identifier of the data block, at the second location in the data graph according to the display instruction information.

An embodiment of the present invention further provides a front end display device, including:
an obtaining module, configured to: when a user intends to move a data block in a data graph from a first location to a second location, obtain location information of the second location;
a sending module, configured to send relocation request information to a back end processing device,, wherein the relocation request information carries the location information of the second location and an identifier of the data block;
a receiving module, configured to receive display instruction information sent from the back end processing device, wherein the display instruction information carries the location information of the second location and the identifier of the data block; and
a displaying module, configured to display the data block corresponding to the identifier of the data block, at the second location in the data graph according to the display instruction information.

An embodiment of the present invention further provides a back end processing device, including:
a receiving module, configured to: when a user intends to move a data block in a data graph from a first location to a second location, receive relocation request information carrying location information of the second location of the data block, sent from a front end display device; and
a sending module, configured to send display instruction information to the front end display device,wherein the display instruction information carries the location information of the second location and the identifier of the data block, so that the front end display device displays the data block corresponding to the identifier of the data block, at the second location in the data graph according to the display instruction information.

An embodiment of the present invention further provides a data block processing system, including the above front end display device and the above back end processing device.

With the data block processing method and system, front end display device, and back end processing device in embodiments of the present invention, when a user intends to move a data block in a data graph from a first location to a second location, the front end display device obtains location information of the second location; the front end display device sends relocation request information to the back end processing device,wherein the relocation request information carries the location information of the second location and an identifier of the data block; the front end display device receives display instruction information carrying the location information of the second location and the identifier of the data block, sent from the back end processing device; and the front end display device displays the data block corresponding to the identifier of the data block, at the second location in the data graph according to the display instruction information. With the technical solutions of the embodiments of the present invention, relocation operations such as drag can be performed on data blocks of data graphs, which overcomes the defect of failure to perform relocation operations such as drag on static data blocks of data graphs in the prior art. Therefore, with the technical solutions of the embodiments of the present invention, the efficiency of data processing in a data graph can be improved effectively.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a data block processing method according to a first embodiment of the present invention;
FIG. 2 is a schematic diagram of a data graph which is a bar graph according to an embodiment of the present invention;

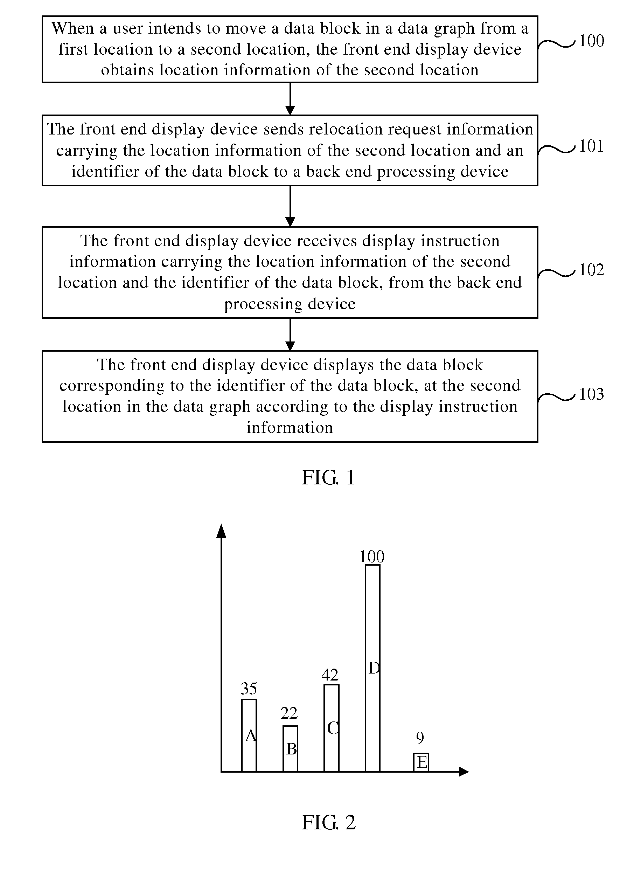

FIG. 2 is a schematic diagram of a data graph which is a fan graph according to an embodiment of the present invention;

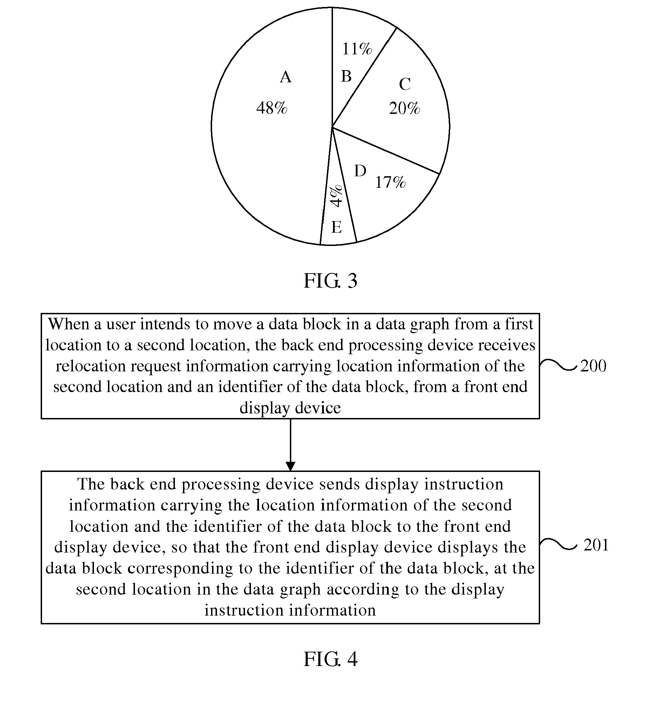

FIG. 4 is a flowchart of a data block processing method according to another embodiment of the present invention;

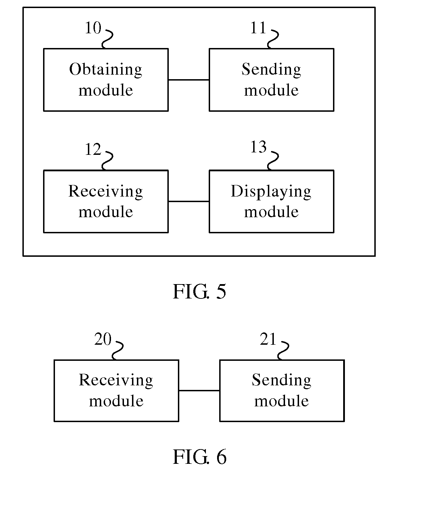

FIG. 5 is a schematic structural diagram of a front end display device according to an embodiment of the present invention;
FIG. 6 is a schematic structural diagram of a back end processing device according to an embodiment of the present invention;

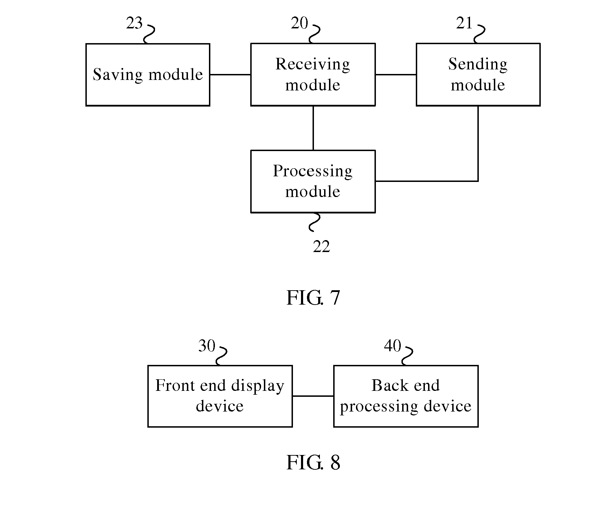

FIG. 7 is a schematic structural diagram of a back end processing device according to another embodiment of the present invention; and
FIG. 8 is a schematic structural diagram of a data block processing system according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

FIG. 1 is a flowchart of a data block processing method according to a first embodiment of the present invention. As shown in FIG. 1, the executor of the data block processing method of this embodiment is a front end display device. The data block processing method of this embodiment may specifically include the following steps:
100. When a user intends to move a data block in a data graph from a first location to a second location, the front end display device obtains location information of the second location.
101. The front end display device sends relocation request information carrying the location information of the second location and an identifier of the data block to a back end processing device.
102. The front end display device receives display instruction information carrying the location information of the second location and the identifier of the data block, sent from the back end processing device.
103. The front end display device displays the data block corresponding to the identifier of the data block, at the second location in the data graph according to the display instruction information.

With the data block processing method of this embodiment, when a user intends to move a data block in a data graph from a first location to a second location, the front end display device obtains location information of the second location; the front end display device sends relocation request information to the back end processing device,wherein the relocation request information carries the location information of the second location and an identifier of the data block; the front end display device receives display instruction information carrying the location information of the second location and the identifier of the data block, sent from the back end processing device; and the front end display device displays the data block corresponding to the identifier of the data block, at the second location in the data graph according to the display instruction information. With the technical solution of this embodiment, relocation operations such as drag can be performed on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

It should be noted that in the embodiment shown in FIG. 1, each data block can be displayed at only one location; when the front end display device displays the data block at the second location in the data graph according to the display instruction information, it indicates that the data block is not displayed at the original location of the data block, namely, the first location. In some cases, for more definite comparison and analysis, the first location before the data block is relocated may be displayed as dotted lines after the data block is relocated, which indicates that the data block is relocated just now. Meanwhile, after the data block is relocated, the data amount represented by the data block is still displayed at the dotted lines of the first location. If the data block is relocated from the second location to a third location, the dotted lines used for identifying the data block at the corresponding first location disappear, while the area where the data block is previously located at the second location becomes dotted lines. Or when the data block is displayed, different colors may be used for identification, for example, the current location of the data block may be identified by a bright color, while after the data block is relocated, the above corresponding dotted lines may be identified by gray. The embodiment of the present invention may also use other modes to identify the current location and the location before the relocation, which is not exhaustively described herein.

It should be noted that on the basis of the embodiment shown in FIG. 1, the following alternative technical solutions may be further included.

Alternatively, on the basis of the embodiment shown in FIG. 1, the obtaining, by the front end display device, the location information of the second location of the data block in step 100 specifically includes the following two cases:

First case: The front end display device receives the location information of the second location sent by the user through an input device. For example, the input device corresponding to the embodiment in this case may be a mouse, and the front end display device may be a display. In this case, when the user drags a data block, through a mouse, in the data graph displayed on the display and drags the data block from the first location to the second location, the display may detect and obtain the information that the user intends to relocate the data block to the second location, that is, the display receives the location information of the second location sent by the user through the mouse.

Second case: The front end display device obtains, through detection, the location information of the second location input by the user. For example, the front end display corresponding to the embodiment in this case is a touch screen display, that is, the user may operate the touch screen display through a finger or a stylus pen. When the user drags, through a finger or a stylus pen, a data block in the data graph displayed on the touch screen display and drags the data block from the first location to the second location, the touch screen display obtains, through detection, the location information of the second location input by the user.

Alternatively, on the basis of the embodiment shown in FIG. 1, during or after step 102, the following step (1) may be further included, and during or after step 103, the following step (2) may be further included:
(1) The front end display device receives the data amount identified by the data block, sent from the back end processing device.
(2) The front end display device displays the data amount identified by the data block, at the second location in the data graph.

The data amount identified by the data blockin the embodiment of the present invention refers to the value of the data amount represented by the data block in the data graph. As shown in FIG. 2, when the data graph is a bar graph, the data amount identified by the data blockspecifically refers to the value of the data amount included by the data block, for example, the data amounts identified by data blocks A, B, C, D, and E are 35, 22, 42, 100, and 9 respectively. Or, as shown in FIG. 3, when the data graph is a fan graph, the data amount identified by the data blockspecifically refers to the percentage of the data amount included by the data block, for example, the data amounts identified by data blocks A, B, C, D, and E are 48%, 11%, 20%, 17%, and 4% respectively. When the data graph is a graph represented in other forms, the case is similar and is not exhaustively described herein.

It should be noted that the data block in this embodiment is an entirety, or that each data block in this embodiment may be formed by one or more data units.

Alternatively, on the basis of the embodiment shown in FIG. 1, during or after step 102, the following step (a) may be further included, and during or after step 103, the following step (b) may be further included:
(a) The front end display device receives the data amount display instruction information sent by the back end processing device.

The data amount display instruction information in this embodiment carries the data amount at the first location and the data amount at the second location, where the data amount at the first location and the data amount at the second location are obtained by the back end processing device according to an original data amount at the first location, an original data amount at the second location, and the data amount identified by the data block. For example, the back end processing device may specifically subtract the data amount identified by the data blockfrom the original data amount at the first location to obtain the data amount at the first location, and add the data amount identified by the data blockto the original data amount at the second location to obtain the data amount at the second location.

Alternatively, before step (a), the following step may be further included: The front end display device sends data amount display request information to the back end processing device.
(b) The front end display device updates the display of the data amount at the first location and the display of the data amount at the second location in the data graph.

Further, alternatively, on the basis of the above embodiment, after step 103, the following steps may be further included:
(i) The front end display device receives a saving request initiated by the user.
(ii) The front end display device sends the saving request to the back end processing device, so that the back end processing device saves a database corresponding to the data graph, where the database includes at least the identifier of the data block and the location information of the current second location of the data block.

For example, specifically in the implementation of the technical solution of the embodiment of the present invention, when the front end display device displays the data graph, the display interface may further include many optional buttons, such as backward, forward, and save. By clicking the forward or backward button, a forward or backward request may be sent to the back end processing device, which is applied in a process in which one or more data blocks in the data graph are relocated for consecutive times, so that a previous or next state may be turned to. For example, by clicking the save button, a save button may be sent to the back end processing device, so that the back end processing device saves the database corresponding to the current data graph. It should be noted that the back end processing device saves the database corresponding to the data graph, where the database may store information by using the data block as an object, for example, for each data block, the database stores the location information of the current location of the data block and the data amount identified by the data block. Or the database may also store information by using each location as an object, for example, for the location information of each location, the database stores the identifier of the data block at the location, and the data amount at the location, where the data amount at the location includes the sum of data amounts identified by all data blocks at the location. When a data block in the data graph is relocated, the data graph is changed; correspondingly, the back end processing device may save or update (if the database corresponding to the data graph is already saved previously, saving again may be referred to as updating) the database corresponding to the current data graph. For example, the current location of the data block after the data block is relocated in this embodiment is a second location. Therefore, the database includes at least the identifier of the data block and the location information of the current second location of the data block.

By using the data block processing method of the above embodiment, with the above technical solution, relocation operations such as drag can be performed on data blocks of data graphs, which overcomes the defect of failure to perform relocation operations such as drag on static data blocks of data graphs in the prior art. Therefore, with the technical solution of the above embodiment, the efficiency of data processing in a data graph can be improved effectively.

FIG. 4 is a flowchart of a data block processing method according to another embodiment of the present invention. As shown in FIG. 4, the executor of the data block processing method of this embodiment is a back end processing device. The data block processing method of this embodiment may specifically include the following steps:
200. When a user intends to move a data block in a data graph from a first location to a second location, the back end processing device receives relocation request information carrying location information of the second location and an identifier of the data block, sent from a front end display device.
201. The back end processing device sends display instruction information to the front end display device,wherein the display instruction information carries the location information of the second location and the identifier of the data block, so that the front end display device displays the data block corresponding to the identifier of the data block, at the second location in the data graph according to the display instruction information.

The data block processing method of this embodiment differs from the embodiment shown in FIG. 1 only in that: The data block processing method of this embodiment describes the technical solution of the present invention at the back end processing device side, while the technical solution of the embodiment shown in FIG. 1 describes the technical solution of the present invention at the front end display device side. Therefore, for details about the specific implementation process of this embodiment, reference may also be made to the description of the embodiment shown in FIG. 1, and no further description is provided herein.

With the data block processing method of this embodiment, when a user intends to move a data block in a data graph from a first location to a second location, the back end processing device receives relocation request information carrying location information of the second location and an identifier of the data block, sent from the front end display device; the back end processing device sends display instruction information to the front end display device,wherein the display instruction information carries the location information of the second location and the identifier of the data block, so that the front end display device displays the data block corresponding to the identifier of the data block, at the second location in the data graph according to the display instruction information. With the technical solution of this embodiment, relocation operations such as drag can be performed on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

It should be noted that in the embodiment shown in FIG. 4, each data block can be displayed at only one location; when the front end display device displays the data block at the second location in the data graph according to the display instruction information, it indicates that the data block is not displayed at the original location of the data block, namely, the first location. In some cases, for more definite comparison and analysis, the first location before the data block is relocated may be displayed as dotted lines after the data block is relocated, which indicates that the data block is relocated just now. For details, reference may be made to the description of the subsequent alternative embodiment of the embodiment shown in FIG. 1.

It should be noted that on the basis of the embodiment shown in FIG. 4, the following alternative technical solutions may be further included.

Alternatively, on the basis of the embodiment shown in FIG. 4, during or after step 201, the following step may be further included:

The back end processing device sends the data amount identified by the data block to the front end display device, so that the front end display device displays the data amount identified by the data block, at the second location in the data graph.

Alternatively, on the basis of the embodiment shown in FIG. 4, after "the back end processing device receives relocation request information carrying location information of the second location, sent from a front end display device" in step 200, the following step (1) may be further included, and during or after step 201, the following step (2) may be further included:
(1) The back end processing device obtains a data amount at the first location and a data amount at the second location according to an original data amount at the first location, an original data amount at the second location, and the data amount identified by the data block.

For example, the back end processing device may specifically subtract the data amount identified by the data block from the original data amount at the first location to obtain the data amount at the first location, and add the data amount identified by the data block to the original data amount at the second location to obtain the data amount at the second location.
(2) The back end processing device sends data amount display instruction information to the front end display device,wherein the data amount display instruction information carries the data amount at the first location and the data amount at the second location, so that the front end display device updates the display of the data amount at the first location and the display of the data amount at the second location in the data graph.

Further, alternatively, on the basis of the above technical solution, after step 201 in the data block processing method of the above embodiment, the following steps may be further included:
(a) The back end processing device receives a saving request sent by the front end display device.
(b) The back end processing device saves a database corresponding to the data graph, where the database includes at least the identifier of the data block and the location information of the current second location of the data block.

Similarly to the subsequent alternative embodiment of the embodiment shown in FIG. 1, in the implementation of the technical solution of the embodiment of the present invention, when the front end display device displays the data graph, the display interface may further include many optional buttons, such as backward, forward, and save. For details, reference may be made to the description of the subsequent alternative embodiment of the embodiment shown in FIG. 1, and no further description is provided herein. When the user clicks the save button on the front end display device through a finger or a stylus pen, the front end display device sends a saving request to the back end processing device; correspondingly, the back end processing device receives the saving request sent by the front end display device, and saves the data graph. Specifically, the back end processing device saves the database corresponding to the data graph. Likewise, the database may store information by using the data block as an object, and may also store information by using each location as an object. For details, reference may be made to the description of the subsequent alternative embodiment of the embodiment shown in FIG. 1. When a data block in the data graph is relocated, the data graph is changed; correspondingly, the back end processing device may save or update (if the database corresponding to the data graph is already saved previously, saving again may be referred to as updating) the database corresponding to the current data graph. For example, the current location of the data block after the data block is relocated in this embodiment is a second location. Therefore, the database includes at least the identifier of the data block and the location information of the current second location of the data block.

The subsequent alternative embodiment of the embodiment shown in FIG. 4 differs from the subsequent alternative embodiment of the embodiment shown in FIG. 1 only in that: The subsequent alternative embodiment of the embodiment shown in FIG. 4 describes the technical solution of the present invention at the back end processing device side, while the subsequent alternative embodiment of the embodiment shown in FIG. 1 describes the technical solution of the present invention at the front end display device side. Therefore, for details about the specific implementation of the embodiment shown in FIG. 4, reference may also be made to the description of the subsequent alternative embodiment of the embodiment shown in FIG. 1, and no further description is provided herein.

By using the data block processing method of the above embodiment, with the above technical solution, relocation operations such as drag can be performed on data blocks of data graphs, which overcomes the defect of failure to perform relocation operations such as drag on static data blocks of data graphs in the prior art. Therefore, with the technical solution of the above embodiment, the efficiency of data processing in a data graph can be improved effectively.

Persons of ordinary skill in the art may understand that all or part of the steps of the method in the embodiments may be implemented by a program instructing relevant hardware. The program may be saved in a computer readable storage medium. When the program is run, the steps of the forgoing methods in the embodiments are performed. The storage medium includes any medium that is capable of storing program codes, such as a ROM, a RAM, a magnetic disk, or an optical disk.

FIG. 5 is a schematic structural diagram of a front end display device according to an embodiment of the present invention. As shown in FIG. 5, the front end display device of this embodiment may specifically include: an obtaining module 10, a sending module 11, a receiving module 12, and a displaying module 13.

The obtaining module 10 is configured to: when a user intends to move a data block in a data graph from a first location to a second location, obtain location information of the second location. The sending module 11 is connected to the obtaining module 10. The sending module 11 is configured to send relocation request information carrying the location information of the second location obtained by the obtaining module 10 and an identifier of the data block to a back end processing device. The receiving module 12 is configured to receive display instruction information sent from the back end processing device, wherein the display instruction information carries the location information of the second location and the identifier of the data block. The displaying module 13 is connected to the receiving module 12. The displaying module 13 is configured to display the data block corresponding to the identifier of the data block, at the second location in the data graph according to the display instruction information received by the receiving module 12.

The front end display device of this embodiment uses the above modules to implement the data block processing method, which is the same as the implementation mechanism of the above related method embodiments. For details, reference may be made to the description of the above related method embodiments, and no further description is provided herein.

By using the above modules, when a user intends to move a data block in a data graph from a first location to a second location, the front end display device of this embodiment obtains location information of the second location; the front end display device sends relocation request information to the back end processing device,wherein the relocation request information carries the location information of the second location and an identifier of the data block; the front end display device receives display instruction information carrying the location information of the second location and the identifier of the data block, sent from the back end processing device; and the front end display device displays the data block corresponding to the identifier of the data block, at the second location in the data graph according to the display instruction information. With the technical solution of this embodiment, relocation operations such as drag can be performed on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

It should be noted that on the basis of the embodiment shown in FIG. 5, the following alternative technical solutions may be further included.

Alternatively, on the basis of the embodiment shown in FIG. 5, the obtaining module 10 is specifically configured to receive the location information of the second location sent by the user through an input device; or specifically configured to obtain, through detection, the location information of the second location input by the user.

Alternatively, on the basis of the embodiment shown in FIG. 5, the receiving module 12 is further configured to: when or after receiving display instruction information sent from the back end processing device,wherein the display instruction information carries the location information of the second location and the identifier of the data block, receive a data amount identified by the data block, sent from the back end processing device; the displaying module 13 is further configured to: when or after displaying the data block corresponding to the identifier of the data block, at the second location in the data graph according to the display instruction information, display the data amount identified by the data blockand received by the receiving module 12, at the second location in the data graph.

Alternatively, on the basis of the embodiment shown in FIG. 5, the receiving module 12 is further configured to: when or after receiving display instruction information sent from the back end processing device,wherein the display instruction information carries the location information of the second location and the identifier of the data block, receive data amount display instruction information sent by the back end processing device, where the data amount display instruction information carries a data amount at the first location and a data amount at the second location, where the data amount at the first location and the data amount at the second location are obtained by the back end processing device according to an original data amount at the first location, an original data amount at the second location, and the data amount identified by the data block; the displaying module 13 is further configured to update the display of the data amount at the first location and the display of the data amount at the second location which are received by the receiving module 12 in the data graph.

Alternatively, on the basis of the embodiment shown in FIG. 5, the obtaining module 10 is further configured to: when or after displaying the data block corresponding to the identifier of the data block, at the second location in the data graph according to the display instruction information, receive a saving request initiated by the user; the sending module 11 is further configured to send the saving request received by the obtaining module 10 to the back end processing device, so that the back end processing device saves a database corresponding to the data graph, where the database includes at least the identifier of the data block and the location information of the current second location of the data block.

The front end display module of the above embodiment uses the above modules to implement the data block processing method, which is the same as the implementation mechanism of the above related method embodiments. For details, reference may be made to the description of the above related method embodiments, and no further description is provided herein.

By using the front end display device of the above embodiment, with the technical solution of the above embodiment, relocation operations such as drag can be performed on data blocks of data graphs, which overcomes the defect of failure to perform relocation operations such as drag on static data blocks of data graphs in the prior art. Therefore, with the technical solution of the above embodiment, the efficiency of data processing in a data graph can be improved effectively.

FIG. 6 is a schematic structural diagram of a back end processing device according to an embodiment of the present invention. As shown in FIG. 6, the back end processing device of this embodiment may specifically include: a receiving module 20 and a sending module 21.

The receiving module 20 is configured to: when a user intends to move a data block in a data graph from a first location to a second location, receive relocation request information carrying location information of the second location and an identifier of the data block, sent from a front end display device. The sending module 21 is connected to the receiving module 20. The sending module 21 is configured to: after the receiving module 20 receives relocation request information carrying location information of the second location and the identifier of the data block, sent from the front end display device, send display instruction information to the front end display device,wherein the display instruction information carries the location information of the second location and the identifier of the data block, so that the front end display device displays the data block corresponding to the identifier of the data block, at the second location in the data graph according to the display instruction information.

The back end processing device of this embodiment uses the above modules to implement the data block processing method, which is the same as the implementation mechanism of the above related method embodiments. For details, reference may be made to the description of the above related method embodiments, and no further description is provided herein.

By using the above modules, when a user intends to move a data block in a data graph from a first location to a second location, the back end processing device of this embodiment receives relocation request information carrying location information of the second location and an identifier of the data block, sent from the front end display device; the back end processing device sends display instruction information to the front end display device,wherein the display instruction information carries the location information of the second location and the identifier of the data block, so that the front end display device displays the data block corresponding to the identifier of the data block, at the second location in the data graph according to the display instruction information. With the technical solution of this embodiment, relocation operations such as drag can be performed on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

FIG. 7 is a schematic structural diagram of a back end processing device according to another embodiment of the present invention. As shown in FIG. 7, the back end processing device of this embodiment may further include the following technical solution on the basis of the embodiment shown in FIG. 7.

The sending module 21 in the back end processing device of this embodiment is further configured to: when or after sending display instruction information to the front end display device,wherein the display instruction information carries the location information of the second location and the identifier of the data block, send a data amount identified by the data block to the front end display device, so that the front end display device displays the data amount identified by the data block, at the second location in the data graph.

Alternatively, the back end processing device of this embodiment may specifically further include a processing module 22.

The processing module 22 is connected to the receiving module 20. The processing module 22 is configured to: after the receiving module 20 receives relocation request information carrying location information of the second location of the data block, sent from the front end display device, obtain a data amount at the first location and a data amount at the second location according to an original data amount at the first location, an original data amount at the second location, and the data amount identified by the data block. The sending module 21 is connected to the processing module 22. The sending module 21 is further configured to: when or after sending display instruction information to the front end display device,wherein the display instruction information carries the location information of the second location and the identifier of the data block, send data amount display instruction information carrying the data amount at the first location and the data amount at the second location which are obtained by the processing module 22 to the front end display device, so that the front end display device updates the display of the data amount at the first location and the display of the data amount at the second location in the data graph.

Alternatively, the back end processing device of this embodiment may specifically further include a saving module 23.

The receiving module 20 is further configured to receive the saving request sent by the front end display device. The saving module 23 is connected to the receiving module 20. The saving module 23 is further configured to save a database corresponding to the data graph, where the database includes at least the identifier of the data block and the location information of the current second location of the data block.

The back end processing device of this embodiment uses the above modules to implement the data block processing method, which is the same as the implementation mechanism of the above related method embodiments. For details, reference may be made to the description of the above related method embodiments, and no further description is provided herein.

The back end processing device of this embodiment can perform, by using the above modules, relocation operations such as drag on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

FIG. 8 is a schematic structural diagram of a data block processing system according to an embodiment of the present invention. As shown in FIG. 8, the data block processing system of this embodiment may specifically include a front end display device 30 and a back end processing device 40.

The front end display device 30 may be specifically a front end display module in the embodiment shown in FIG. 5 or a subsequent alternative embodiment thereof, and the back end processing device 40 may be specifically a back end processing device in the embodiment shown in FIG. 6 or FIG. 7. Specifically, the data block processing method of the embodiment shown in FIG. 1 or FIG. 4 may be used between the front end display device 30 and the back end processing device 40 in this embodiment to implement data block processing. For details, reference may be made to the description of the above related embodiments, and no further description is provided herein.

With the data block processing system of this embodiment, by using the above front end display device and back end processing device, when a user intends to move a data block in a data graph from a first location to a second location, the front end display device obtains location information of the second location; the front end display device sends relocation request information to the back end processing device,wherein the relocation request information carries the location information of the second location and an identifier of the data block; the front end display device receives display instruction information carrying the location information of the second location and the identifier of the data block, sent from the back end processing device; and the front end display device displays the data block corresponding to the identifier of the data block, at the second location in the data graph according to the display instruction information. With the technical solution of this embodiment, relocation operations such as drag can be performed on data blocks of data graphs, which overcomes the defect of failure to perform relocation operations such as drag on static data blocks of data graphs in the prior art. Therefore, with the technical solution of this embodiment, the efficiency of data processing in a data graph can be improved effectively.

The front end display device in the embodiments of the present invention may be specifically an electronic display device such as a display, and the back end processing device may be specifically a processing device with the processing function such as a computer.

The foregoing described apparatus embodiment is merely exemplary. The units described as separate parts may or may not be physically separated, and parts displayed as units may or may not be physical units, may be located in one position, or may be distributed on at least two network elements. A part of or all of the modules may be selected according to the actual need to achieve the objectives of the solutions of the embodiments. Persons of ordinary skill in the art may understand and implement the embodiments without creative efforts.

Finally, it should be noted that the above embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, as long as such modifications or replacements do not cause the essence of corresponding technical solutions to depart from the scope of the technical solutions of the embodiments of the present invention.

## Claims

1. A data block processing method, comprising:
when a user intends to move a data block in a data graph from a first location to a second location, obtaining location information of the second location;
sending relocation request information to a back end processing device, wherein the relocation request information carries the location information of the second location and an identifier of the data block;
receiving display instruction information sent from the back end processing device, wherein the display instruction information carries the location information of the second location and the identifier of the data block; and
displaying the data block corresponding to the identifier of the data block, at the second location in the data graph according to the display instruction information.

2. The method according to claim 1, wherein the obtaining location information of the second location of the data block comprises:
receiving the location information of the second location sent by the user through an input device; or
obtaining, through detection, the location information of the second location input by the user.

3. The method according to claim 1 or 2, wherein when or after receiving display instruction information sent from the back end processing device,wherein the display instruction information carries the location information of the second location and the identifier of the data block, the method further comprises: receiving a data amount identified by the data block, sent from the back end processing device; and
when or after displaying the data block corresponding to the identifier of the data block, at the second location in the data graph according to the display instruction information, the method further comprises: displaying the data amount identified by the data block, at the second location in the data graph.

4. The method according to any one of claims 1 to 3, wherein when or after receiving display instruction information sent from the back end processing device,wherein the display instruction information carries the location information of the second location and the identifier of the data block, the method further comprises: receiving data amount display instruction information sent by the back end processing device, wherein the data amount display instruction information carries a data amount at the first location and a data amount at the second location, wherein the data amount at the first location and the data amount at the second location are obtained by the back end processing device according to an original data amount at the first location, an original data amount at the second location, and the data amount identified by the data block; and
when or after displaying the data block corresponding to the identifier of the data block, at the second location in the data graph according to the display instruction information, the method further comprises: updating, in the data graph, the display of the data amount at the first location and the display of the data amount at the second location .

5. The method according to any one of claims 1 to 4, wherein after displaying the data block, at the second location in the data graph according to the display instruction information, the method further comprises:
receiving a saving request initiated by the user; and
sending the saving request to the back end processing device, so that the back end processing device saves a database corresponding to the data graph, wherein the database comprises at least the identifier of the data block and the location information of the current second location of the data block.

6. A data block processing method, comprising:
when a user intends to move a data block in a data graph from a first location to a second location, receiving relocation request information sent from a front end display device, wherein the relocation request information carries the location information of the second location and an identifier of the data block; and
sending display instruction information to the front end display device , wherein the display instruction information carries the location information of the second location and the identifier of the data block, so that the front end display device displays the data block corresponding to the identifier of the data block, at the second location in the data graph according to the display instruction information.

7. The method according to claim 6, wherein when or after sending display instruction information to the front end display device,wherein the display instruction information carries the location information of the second location and the identifier of the data block, the method further comprises:
sending a data amount identified by the data block to the front end display device, so that the front end display device displays the data amount identified by the data block, at the second location in the data graph.

8. The method according to claim 6 or 7, wherein after receiving relocation request information carrying location information of the second location of the data block,sent from the front end display device, the method further comprises: obtaining a data amount at the first location and a data amount at the second location according to an original data amount at the first location, an original data amount at the second location, and the data amount identified by the data block; and
when or after sending display instruction information to the front end display device , wherein the display instruction information carries the location information of the second location and the identifier of the data block, the method further comprises: sending data amount display instruction information to the front end display device,wherein the data amount display instruction information carries the data amount at the first location and the data amount at the second location, so that the front end display device updates the display of the data amount at the first location and the display of the data amount at the second location in the data graph.

9. The method according to any one of claims 6 to 8, wherein after sending display instruction information to the front end display device , wherein the display instruction information carries the location information of the second location and the identifier of the data block, the method further comprises:
receiving a saving request sent by the front end display device; and
saving a database corresponding to the data graph, wherein the database comprises at least the identifier of the data block and the location information of the current second location of the data block.

10. A front end display device, comprising:
an obtaining module, configured to: when a user intends to move a data block in a data graph from a first location to a second location, obtain location information of the second location;
a sending module, configured to send relocation request information to a back end processing device,, wherein the relocation request information carries the location information of the second location and an identifier of the data block;
a receiving module, configured to receive display instruction information sent from the back end processing device, wherein the display instruction information carries the location information of the second location and the identifier of the data block; and
a displaying module, configured to display the data block corresponding to the identifier of the data block, at the second location in the data graph according to the display instruction information.

11. The device according to claim 10, wherein the obtaining module is specifically configured to: receive location information of the second location sent by the user through an input device; or obtain, through detection, location information of the second location input by the user.

12. The device according to claim 10 or 11, wherein
the receiving module is further configured to: when or after receiving display instruction information sent from the back end processing device, wherein the display instruction information carries the location information of the second location and the identifier of the data block, receive a data amount identified by the data block, sent from the back end processing device; and
the display device is further configured to: when or after displaying the data block corresponding to the identifier of the data block, at the second location in the data graph according to the display instruction information, display the data amount identified by the data block, at the second location in the data graph.

13. The device according to any one of claims 10 to 12, wherein
the receiving module is further configured to: when or after receiving display instruction information sent from the back end processing device,wherein the display instruction information carries the location information of the second location and the identifier of the data block, receive data amount display instruction information sent by the back end processing device, wherein the data amount display instruction information carries a data amount at the first location and a data amount at the second location, wherein the data amount at the first location and the data amount at the second location are obtained by the back end processing device according to an original data amount at the first location, an original data amount at the second location, and the data amount identified by the data block; and
the display device is further configured to: when or after displaying the data block corresponding to the identifier of the data block, at the second location in the data graph according to the display instruction information, update the display of the data amount at the first location and the display of the data amount at the second location in the data graph.

14. The device according to any one of claims 10 to 13, wherein
the obtaining module is further configured to: after the displaying module displays the data block, at the second location in the data graph according to the display instruction information, receive a saving request initiated by the user; and
the sending module is further configured to send the saving request to the back end processing device, so that the back end processing device saves a database corresponding to the data graph, wherein the database comprises at least the identifier of the data block and the location information of the current second location of the data block.

15. A back end processing device, comprising:
a receiving module, configured to: when a user intends to move a data block in a data graph from a first location to a second location, receive relocation request information carrying location information of the second location and an identifier of the data block, sent from a front end display device; and
a sending module, configured to send display instruction information to the front end display device,wherein the display instruction information carries the location information of the second location and the identifier of the data block, so that the front end display device displays the data block corresponding to the identifier of the data block, at the second location in the data graph according to the display instruction information.

16. The device according to claim 15, wherein
the sending module is further configured to: when or after sending display instruction information to the front end display device,wherein the display instruction information carries the location information of the second location and the identifier of the data block, send a data amount identified by the data block to the front end display device, so that the front end display device displays the data amount identified by the data block, at the second location in the data graph.

17. The device according to claim 15 or 16, further comprising a processing module, wherein the processing module is configured to: after the receiving module receives relocation request information carrying location information of the second location of the data block, sent from the front end display device, obtain a data amount at the first location and a data amount at the second location according to an original data amount at the first location, an original data amount at the second location, and the data amount identified by the data block; and
the sending module is further configured to: when or after sending display instruction information to the front end display device,wherein the display instruction information carries the location information of the second location and the identifier of the data block, send data amount display instruction information to the front end display device,wherein the data amount display instruction information carries the data amount at the first location and the data amount at the second location, so that the front end display device updates the display of the data amount at the first location and the display of the data amount at the second location in the data graph.

18. The device according to any one of claims 15 to 17, further comprising a saving module,
wherein
the receiving module is further configured to: after the sending module sends display instruction information to the front end display device ,wherein the display instruction information carries the location information of the second location and the identifier of the data bloc, receive a saving request sent by the front end display device; and
the saving module is further configured to save a database corresponding to the data graph, wherein the database comprises at least the identifier of the data block and the location information of the current second location of the data block.

19. A data block processing system, comprising the front end display device according to any one of claims 10 to 14 and the back end processing device according to any one of claims 15 to 18.
